# EUROPEAN PATENT SPECIFICATION

(11) **EP 2 045 052 B1**
(45) Date of publication and mention of the grant of the patent: **21.09.2011**
(21) Application number: 07768294.6
(22) Date of filing: 06.07.2007
(51) Int. Cl.: B26B 19/44, B26B 19/38, A45D 27/46

(54) **SHAVER**
RASIERER
RASOIR

(30) Priority: 20.07.2006 JP 2006197975
(43) Date of publication of application: 08.04.2009
(73) Proprietor: Panasonic Electric Works Co., Ltd., Kadoma-shi Osaka 571-8686 (JP)
(72) Inventor: KITAMURA, Hiroyasu, Kadoma-shi Osaka 571-8686 (JP)
(74) Representative: Müller-Boré & Partner Patentanwälte
(86) International application number: PCT/JP2007/063562
(87) International publication number: WO 2008/010426

(56) References cited:
- EP-A1- 1 535 708
- WO-A2-2004/075316
- WO-A2-2005/120782
- DE-U1-202004 002 937
- FR-A1- 2 716 402
- JP-A- 01 166 705
- JP-A- 08 173 233
- JP-A- 59 025 298
- US-A1- 2004 237 308

## Description

### Technical Field

The present invention relates to a shaver which is embodied as an electric razor or trimmer, particularly to ones which are preferably implemented in a configuration in which hair and skin tissues adhered to the blade edge can be washed off with water.

### Background Art

A typical conventional art of a water washable shaver as describe above has been proposed, for example, by the present applicant in Patent Document 1. In this conventional art, there is proposed a shaver in which an inner blade is driven at a high speed during shaving and at a low speed during water washing so that water or chipped hair will not be scattered during water washing. However, water drops may remain in the interior after the water washing, resulting in insufficient disinfection and sterilization.

Accordingly, a cleaner has been proposed, for example, in Patent Documents 2 and 3, which is configured such that the blade edge is cleaned with alcohol after use and thereafter is further dried. Using such a cleaner will allow the drying to be performed at a high temperature, thereby keeping the blade edge to be clean.

Although such conventional arts of Patent Documents 2 and 3 enable the blade edge to be kept clean, a large sized cleaner is required and consideration must be given to the installation space and power supply (receptacle) therefor.
Patent Document 1: Japanese Patent Laid-Open No. 2004-16285
Patent Document 2: Japanese Patent No. 3652393
Patent Document 3: Japanese Patent Laid-Open No. 2004-243112 A shaver according to the preamble of claim 1 is also known from WO 2004/075316 A2.

### Disclosure of the Invention

It is an object of the present invention to provide a shaver of which blade edge can readily be kept clean.

The shaver of the present invention comprises a fuel cell which supplies power to a driving part for driving and displacing a blade, and a heat transfer part for guiding heat from the above described fuel cell to the vicinity of the blade. Since a shaver of the configuration described above comprises a fuel cell and therefore the constraints of power supply wiring are eliminated by the driving by the fuel cell, the selection range of storage place will be widened. Further, since the heat transfer part conducts heat from the fuel cell to the vicinity of the blade, it becomes possible to facilitate the drying after water washing without using a dedicated cleaner etc., and also to perform heat sterilization of the blade.

### Brief Description of the Drawings

Figure 1 a partially cut-off front view to illustrate the structure of the shaver relating to an embodiment of the present invention;
Figure 2 is a sectional view in a longitudinal direction to illustrate the structure of the shaver relating to the embodiment of the present invention;
Figure 3 is an exploded perspective view to show the vicinity of a blade holder mounted on the upper part in the body of the shaver shown in Figures 1 and 2;
Figure 4 is an exploded perspective view to show the vicinity of a blade holder mounted on the upper part of the body of the shaver shown in Figures 1 and 2;
Figure 5 is a block diagram to show a configuration example of the electric circuit of the shaver shown in Figures 1 and 2;
Figure 6 a partially cut-off front view to illustrate the structure of the shaver relating to another embodiment of the present invention: and
Figure 7 is a sectional view in a longitudinal direction to illustrate the structure of the shaver relating to the another embodiment of the present invention.

### Best Mode for Carrying Out the Invention

Hereinafter, an embodiment relating to the present invention will be described based on the drawings. It is noted that configurations which are given like symbols in each figure represent like configurations and the description thereof will be omitted.

### [Embodiment 1]

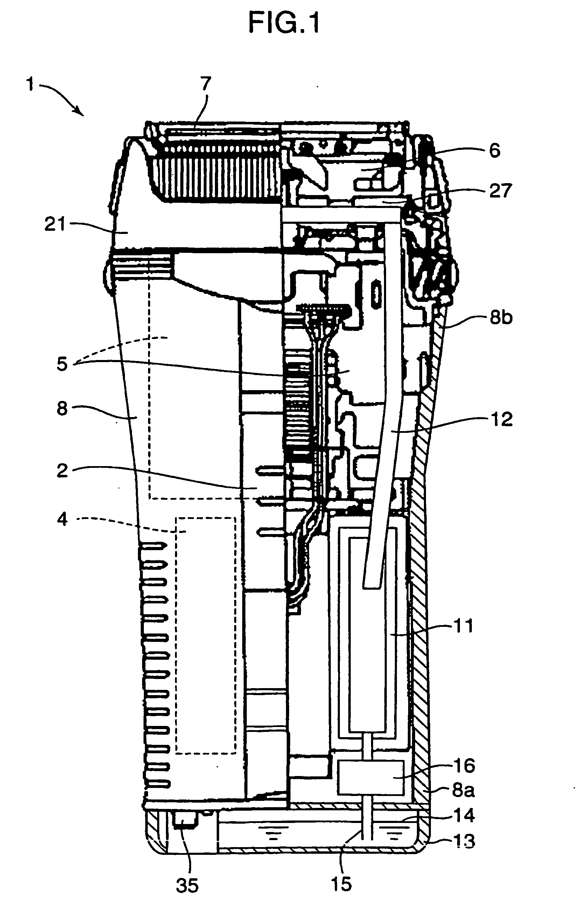

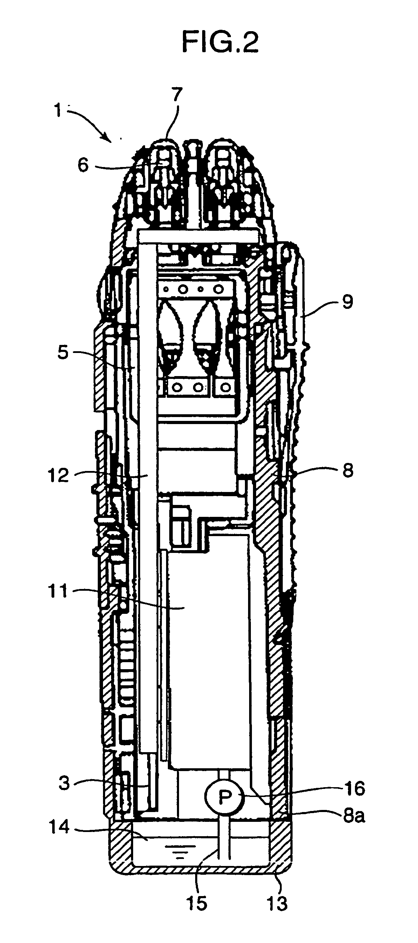

Figures 1 and 2 illustrate the configuration of a shaver 1 relating to an embodiment of the present invention. Figure 1 is a partially cut-off front view and Figure 2 is a sectional view in a longitudinal direction.

In the shaver 1 in Figures 1 and 2, when a slide switch 2 is actuated, an electric circuit formed on a substrate 3 provides electric power stored in a secondary cell 4 to a motor 5 to cause an inner blade 6 to make a linear reciprocating motion so that a hair removal operation is performed between the aforementioned inner blade 6 and an outer blade 7. Further, a trimmer 9 provided in the back face of a body 8 is actuated, as desired, so that the driving force is transferred to the trimmer 9 as well, enabling hair removal operation.

It should be noted that in the shaver 1, while the electric power generated by a fuel cell 11 is used for electrically energizing the motor 5 which is a driving part, waste heat from the fuel cell 11 is guided to the vicinity of the above described inner blade 6 by a heat pipe 12 which is a heat transfer part so that the fuel cell 11 is used as the heat source for heating the inner blade 6. For this purpose, a cartridge tank 13 for storing the fuel for the fuel cell 11 is detachably provided in the bottom part 8a of the above described body 8. When the cartridge tank 13 is mounted to the bottom part 8a of the body 8, stored ethanol 14 is sucked up through a conduit 15 by a pump 16 which is a supply part to be provided to the above described fuel cell 11.

The above described fuel cell 11 is configured such that an electrolytic membrane is sandwiched by an anode and a cathode. The fuel cell 11 generates power by causing the above described ethanol 14 sucked up by the above described pump 16 to react with oxygen in the air. Through the power generation, air (oxygen) is taken in and water is discharged at the above described cathode side. The water is once absorbed into unshown absorbing means such as cloth and thereafter is dissipated into the air. At the anode side, the above described ethanol 14 is taken in and carbon dioxide is discharged. The electric power generated is inputted into an electric circuit formed on the above described substrate 3 and is boosted in voltage to be stored in the above described secondary cell 4.

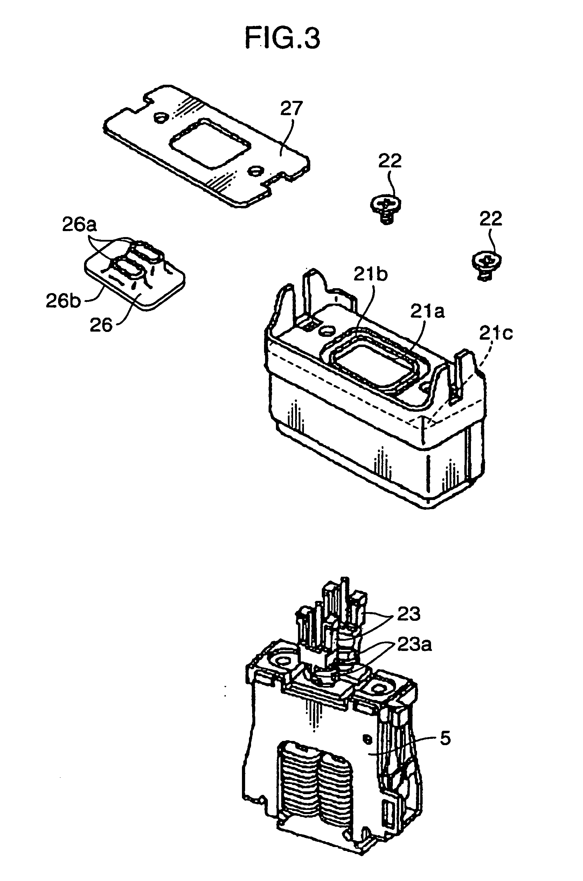

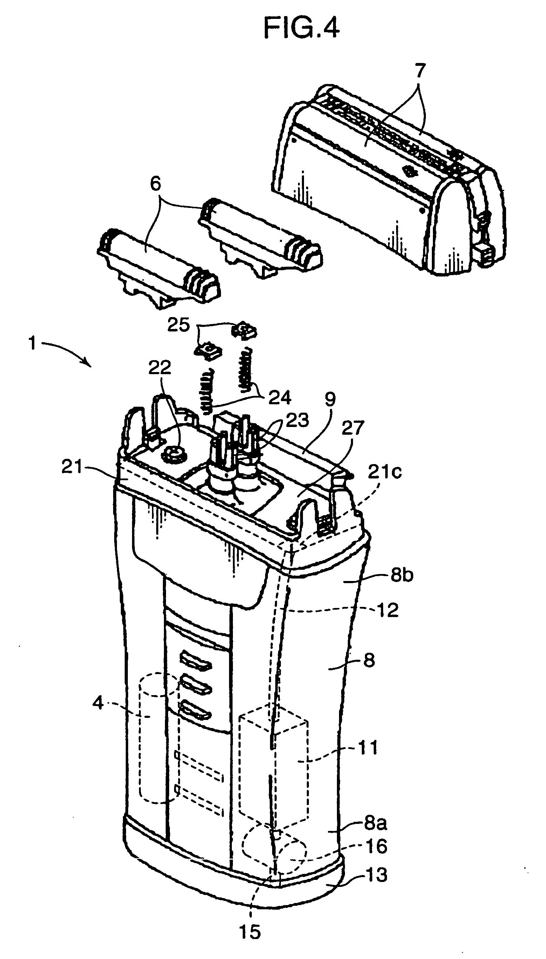

Figures 3 and 4 are exploded perspective views of the vicinity of a blade holder 21 mounted on the upper part 8b of the above described body 8. In Figures 3 and 4, the above described motor 5 is attached to a lower side of the blade holder 21 which is a base support, with screws 22. Drive elements 23, which make a linear reciprocating motion in the lateral direction, protrude in a front-and-rear pair from the above described motor 5 through a hole 21a formed in the middle of the blade holder 21. An inner blade pushup spring 24 is attached to the above described drive element 23 with a spring locking member 25. When the above described detachable inner blade 6 is mounted to the drive element 23, the inner blade 6 is pressed against the outer blade 7 by the above described inner blade pushup spring 24.

The base end side of the above described drive element 23 forms a watertight seal part 23a having a large diameter. After the drive element 23 is inserted into an inner O-ring part 26a of watertight rubber 26, the watertight seal part 23a comes into close contact with the inner peripheral surface of the inner O-ring part 26a. On the other hand, a rubber pressing plate 27 is attached to the blade holder 21 with the above described screws 22 so that the above described watertight rubber 26 is interposed between the rubber pressing plate 27 and the blade holder 21. Then a convex strip 21b formed in the peripheral edge part of the above described hole 21a fits into the outer peripheral edge part 26b of the above described watertight rubber 26. Thus, the inner configurations of the body 8 such as the motor 5 are air tightly held by the watertight rubber 26 for the cleaning of the inner blade 6 with the above described outer blade 7 being detached.

Further, in the present embodiment, a hole 21c is formed at a corner part of the above described blade holder 21. Through this hole 21c, the tip end of the above described heat pipe 12 comes into contact with the above described rubber pressing plate 27. As a result of this, the rubber pressing plate 27 is heated so that the space surrounded by the blade holder 21, the outer blade 7 and the rubber pressing plate 27 is filled with hot air, and the drying and sterilization of the outer blade 7 and the inner blade 6 can be performed with the hot air. Thus, even if the inner and outer blades 6 and 7 in which dirt tends to be accumulated, particularly the inner blade 6 which is to be driven and displaced is not heated by directly connecting the above described heat pipe 12 thereto, it is possible to perform the drying and sterilization thereof.

For example, in the present embodiment, in which the above described ethanol 14 is used as the fuel, 1 cc of fuel is needed to obtain 1 Wh of electric power in the case of a direct methanol method, and therefore 0.3 cc of fuel is needed for use of a common shaver at 3 W for about 6 minutes. When power generation is performed using such an amount of fuel, the temperature of the outer blade 7 becomes, for example, about 70 degrees, and therefore even if a user uses the shaver during power generation and drying to shave hair which is left unshaved, the outer blade 7 will cause the user to feel hot only instantly and rapidly cools through the contact with the skin of the user without causing a burn thereon.

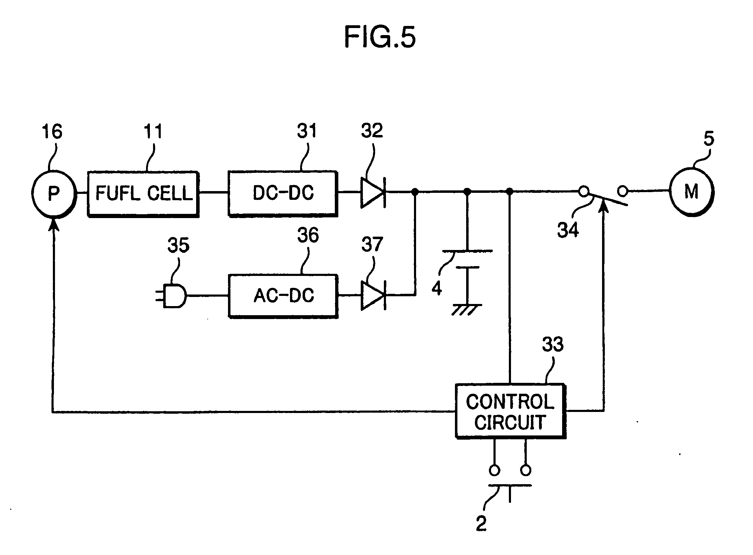

Figure 5 is a block diagram to show the configuration of the electric circuit mounted on the above described substrate 3 in the shaver 1 configured as described above. In Figure 5, the electric power generated by the fuel cell 11 is boosted in voltage and stabilized by a DC-to-DC converter 31 such as a switching regulator, and is provided to the above described secondary cell 4 through a diode 32 to be stored therein. The electric power thus stored in the secondary cell 4 causes a control circuit 33 such as a microcomputer to operate. The control circuit 33 controls a switching element 34 such as an FET to drive the above described motor 5 in response to the actuation of a slide switch 2.

When a predetermined time, for example, 5 to 10 minutes has passed after the deactivation of the slide switch 2 and the end of hair removal operation, the above described control circuit 33 controls a pump 16 to cause the fuel cell 11 to generate power. Here, the driving of the pump 16 may be performed by providing a dedicated cleaning switch and in response to the actuation of the cleaning switch. Alternatively, it may be configured such that the detachment of the outer blade 7 for cleaning is detected and the driving of the above described pump is performed in response to the detection. In this case, control may be performed such that the above described blades 6 and 7 will not be heated, by such as intermittently driving the pump 16. Further, the control may also be performed such that the above described blades 6 and 7 will not be heated, by providing a temperature sensor in the vicinity of the above described rubber pressing plate 27 and controlling the discharge of the pump 16 depending on the detection result thereof.

On the other hand, an AC terminal 35 is provided for the purpose of backup in the bottom part 8a of the above described body 8. The electric power from the AC terminal 35 is reduced in voltage and stabilized by an AC-to-DC converter 36 such as a switching regulator, thereafter being provided to the secondary cell 4 through a diode 37 and stored therein. Therefore, even when the secondary cell 4 is fully discharged or the fuel runs out, it becomes possible to operate the control circuit 33 and the motor 5, and also becomes possible to suck up fuel and perform power generation by the fuel cell 11.

Thus, using the fuel cell 11 for the power supply of the motor 5 will eliminate the constraints of power supply wiring, thereby making it possible to realize a shaver which can widen the selection range of the storage place thereof. Further, it is possible to facilitate the drying after water washing without using a dedicated cleaner etc. by guiding heat such as waste heat of the power generation by the fuel cell 11 to the vicinity of the inner blade 6 with a heat pipe 21, and using it as the heat source to heat the inner blade 6. Further it is possible to perform heat sterilization of the blades 6 and 7 and to increase the energy use efficiency of the fuel cell 11.

Further, a secondary cell 4 for storing the electric power generated by the above described fuel cell 11 is provided so that the motor 5 is electrically energized by the electric power from the secondary cell 4 to perform hair removal operation and, after the hair removal operation is finished, a control circuit 33 causes the pump 16 to provide fuel to the above described fuel cell 11 and causes the secondary cell 4 to store the generated electric power. As a result of this, power generation is performed, that is, heat is generated after the hair removal operation is finished, which is suitable for the above described drying after water washing and the heat sterilization of the blades.

Further, using the heat pipe 12 as a heat transfer part makes it possible to efficiently guide heat such as waste heat at the fuel cell 11 to the blades 6 and 7. Further the use of ethanol as the fuel by the fuel cell 11 will be suitable for the above described drying and sterilization, since ethyl alcohol has a lower toxicity, is more readily available, and has a higher calorific value when compared with methyl alcohol.

### [Embodiment 2]

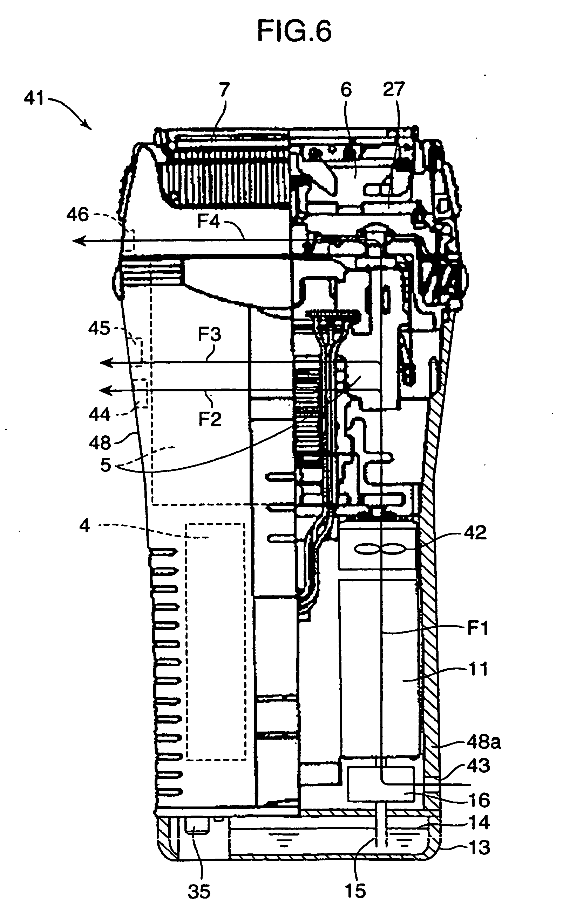

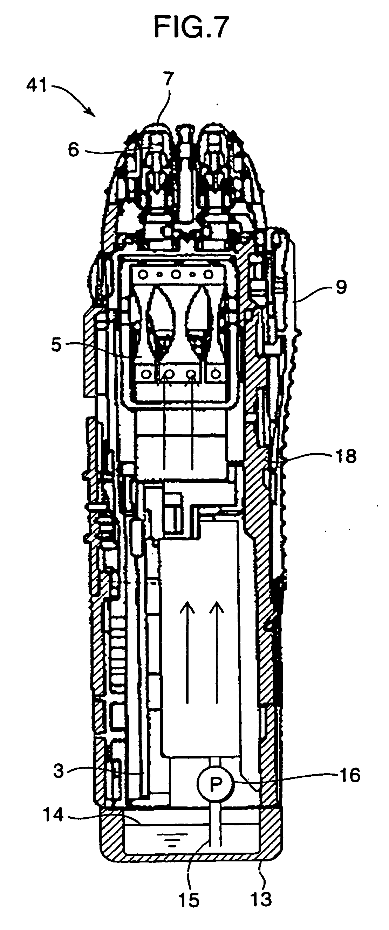

Figures 6 and 7 illustrate the structure of a shaver 41 relating to another embodiment of the present invention. Figure 6 is a partially cut-off front view, and Figure 7 is a sectional view in a longitudinal direction. This shaver 41 is similar to the above described shaver 1, and corresponding parts are given like symbols, thereby omitting the description thereof.

In Figures 6 and 7, it should be noted that in this shaver 41, a blower 42 is used as a heat transfer part for conducting heat such as waste heat from the above described fuel cell 11 to the rubber pressing plate 27, and that the blower 42 has both the functions of a blower for heating the blades 6 and 7 and a blower for releasing heat in the power generation part of the fuel cell 11. That is, the blower 42 has both an air blowing function for heating the blades 6 and 7 and an air blowing function for releasing heat from the heat generation part of the fuel cell 11.

For this purpose, an intake port 43 is formed in the bottom part 48a of a body 48, exhaust ports 44 and 45 are formed in the upper part 48b of the body 48, and an exhaust port 46 is formed in the side part of the above described blade holder 21. The air taken in from the intake port 43 cools the fuel cell 11 passing through the blower 42 as shown by the reference symbol F1, and thereafter is discharged from the exhaust ports 44 and 45 as shown by the reference symbols F2 and F3. Further the air is branched to pass through the back face side of the rubber pressing plate 27, and thereafter is discharged from an exhaust port 46 as shown by the reference symbol F4. Although the remaining configuration including a pump 16 and a secondary cell 4 etc. is similar to that of the above described shaver 1, the control circuit mounted on the substrate 3 appropriately drives the above described blower 42 in conjunction with the driving of the motor 5 and the power generation of the fuel cell 11.

Such a configuring described above allows the sharing of the blower 42, thereby enabling cost reduction.

The above described motor 5 is not limited to a linear motor, but may be configured such that a motor which rotationally drives the output shaft is equipped with a link mechanism for converting the rotational output to the above described linear reciprocating motion, and the inner blade 6 may be a rotary blade.

While the present specification discloses various inventions as described above, principal among them are summarized below.

The shaver according to a first embodiment is a shaver in which a driving part is electrically energized to drive and displace a blade, thereby performing hair removal operation, and which comprises a fuel cell for generating electric power for the above described electrical energization of the above described driving part, and a heat transfer part for guiding heat from the above described fuel cell to the vicinity of the above described blade. Alternatively, the shaver comprises a driving part configured to be electrically energized to drive and displace a blade for performing hair removal operation, a fuel cell for generating electric power for the above described electrical energization of the above described driving part, and a heat transfer part for guiding heat from the above described fuel cell to the vicinity of the above described blade.

According to the above described configuration, in a shaver which is embodied as an electric razor and trimmer etc., a fuel cell is used as the power supply for the shaver, and heat such as waste heat from the power generation by the fuel cell is guided to the vicinity of a blade by a heat transfer part so that the above described fuel cell is also used as a heat source for heating the blade.

Therefore, in the shaver of the above described configuration, the use of fuel cell driving eliminates the constraints of power supply wiring, thereby making it possible to widen the selection range of the storage place. Further, by transferring heat such as waste heat from the fuel cell to the vicinity of a blade, it is made possible to facilitate the drying after water washing without using a dedicated cleaner, and to perform the heat sterilization of the blade. It is also possible to increase the energy use efficiency of the fuel cell.

Further, the shaver relating to a second embodiment is the shaver relating to the first embodiment, further comprising a power storage part for storing the electric power generated by the above described fuel cell; a supply part for supplying fuel to the above described fuel cell; and a control part for causing the above described power storage part to electrically energize the above described driving part to perform the above described hair removal operation, causing the above described supply part to supply fuel to the fuel cell after the above described hair removal operation is finished, and causing the generated electric power to be stored in the above described power storage part.

According to the above described configuration, a power storage part such as a secondary cell is further provided, the driving part is electrically energized with electric power from the power storage part to perform the above described hair removal operation, and after the hair removal operation is finished, the control part causes the supply part to provide fuel to the fuel cell, and causes the generated electric power to be stored in the power storage part.

Therefore, power is generated after the hair removal operation is finished, that is, heat is to be generated, which therefore is suitable for the drying and the heat sterilization of the blade after the above described water washing.

The shaver relating to a third embodiment is the shaver relating to the first or second embodiment, in which the blade driven by the above described driving part is an inner blade, the above described inner blade being enclosed in a space defined by an outer blade, a casing, and a base support, and the above described heat transfer part is connected to the above described base support.

According to the above described configuration, as a result of the base support being heated, the space surrounded by the outer blade, the casing and the base support is filled with hot air and the above described drying and sterilization of the outer and inner blades can be performed with the hot air.

Therefore, such drying and sterilization can be performed even when the heat transfer part is not directly connected to the inner and outer blades at which dirt tends to accumulate, particularly to the inner blade which is to be driven and displaced.

Further, preferably, the heat transfer part is a heat pipe. According to this configuration, heat such as waste heat from the fuel cell can be efficiently guided to the blades.

Further, the shaver according to a fourth embodiment is the shaver relating to any of the first to third embodiments, in which the heat transfer part is a blower and has both an air blowing function for heating the above described blades and an air blowing function for releasing heat from the power generation part of the above described fuel cell.

According to the above described configuration, it is possible to reduce cost by sharing the blower.

Further, preferably the fuel cell is characterized by using ethanol as the fuel. According to this configuration, the use of ethyl alcohol will lower the toxicity and increase the availability of the fuel, compared with the use of methyl alcohol. Also, ethanol has a higher calorific value and is suitable for the above described drying and sterilization.

Although the present invention has been appropriately and sufficiently described for representing the invention through embodiments with reference to the drawings, it should be recognized that those skilled in the art can easily modify and/or improve the above described embodiments. Therefore, it is construed that the modifications and improvements made by those skilled in the art are considered to be included within the scope of the appended claims unless those modifications and improvements depart from the scope of the right of the appended claims.

### Industrial Applicability

According to the present invention, it is possible to provide a shaver utilizing a fuel cell.

## Claims

1. A shaver (1) in which a driving part (5) is electrically energized to drive and displace a blade (6) thereby performing hair removal operation, comprising:
a fuel cell (11) for generating electric power for said electrical energization of said driving part (5); **characterized by**
a heat transfer part (12,42) for guiding heat from said fuel cell (11) to the vicinity of said blade (6).

2. The shaver according to claim 1, further comprising:
a power storage part (4) for storing the electric power generated by said fuel cell (11);
a supply part (16) for supplying fuel (14) to said fuel cell (11); and
a control part (33) for causing said power storage part (4) to electrically energize said driving part (5) to perform said hair removal operation, causing said supply part (16) to supply fuel (14) to the fuel cell (11) after said hair removal operation is finished, and causing the generated electric power to be stored in said power storage part (4).

3. The shaver according to claim 1 or 2, **characterized in that**
the blade driven by said driving part (5) is an inner blade (6), said inner blade being enclosed in a space defined by an outer blade (7), a casing, and a base support (21), and
said heat transfer part (12) is connected to said base support (21).

4. The shaver according to any one of claims 1 to 3. **characterized in that**
said heat transfer part is a blower (42) and has both an air blowing function for heating said blades (6,7) and an air blowing function for releasing heat from the power generation part of said fuel cell (11).

## Patentansprüche

1. Rasierer (1), bei dem ein antreibendes bzw. Antriebsteil (5) elektrisch gespeist bzw. erregt wird, um eine Klinge (6) anzutreiben und dabei einen Haarentfernungsvorgang durchzuführen, umfassend:
eine Brennstoffzelle (11) zum Erzeugen von elektrischer Leistung für das elektrische Speisen des Antriebsteils (5); **gekennzeichnet durch**
ein Wärmeübertragungsteil (12, 42) zum Leiten bzw. Führen von Wärme von der Brennstoffzelle (11) in die Nähe der Klinge (6).

2. Rasierer nach Anspruch 1, ferner umfassend:
ein Leistungsspeicherteil (4) zum Speichern der von der Brennstoffzelle (11) erzeugten elektrischen Leistung;
ein Versorgungsteil (16) zum Liefern von Brennstoff (14) an die Brennstoffzelle (11); und
ein Steuer- bzw. Regelteil (33) zum Veranlassen des Leistungsspeicherteils (4), das Antriebsteil (5) elektrisch zu speisen, um den Haarentfernungsvorgang durchzuführen, zum Veranlassen des Versorgungsteils (16), Brennstoff (14) an die Brennstoffzelle (11) zu liefern, nachdem der Haarentfernungsvorgang beendet ist, und Veranlassen, dass die erzeugte elektrische Leistung in dem Leistungsspeicherteil (4) gespeichert wird.

3. Rasierer nach Anspruch 1 oder 2, **dadurch gekennzeichnet, dass**
die Klinge, die von dem Antriebsteil (5) angetrieben wird, eine innere Klinge (6) ist, wobei die innere Klinge in einem Raum eingeschlossen ist, der durch eine äußere Klinge (7), ein Gehäuse und einen Basis- bzw. Grundträger (21) definiert ist, und
das Wärmeübertragungsteil (12) mit dem Basisträger (21) verbunden ist.

4. Rasierer nach einem der Ansprüche 1 bis 3, **dadurch gekennzeichnet, dass**
das Wärmeübertragungsteil ein Gebläse (42) ist und sowohl eine Lustblasfunktion zum Erwärmen der Klingen (6, 7) als auch eine Luftblasfunktion zum Freisetzen von Wärme aus dem Leistungserzeugungsteil der Brennstoffzelle (11) aufweist.

## Revendications

1. Rasoir (1), dans lequel une partie d'entraînement (5) est alimentée électriquement pour entraîner et déplacer une lame (6), réalisant de ce fait une opération d'élimination de poils, comprenant :
une pile à combustible (11) pour générer de la puissance électrique pour ladite alimentation électrique de ladite partie d'entraînement (5) ; **caractérisé par** une partie de transfert thermique (12, 42) pour guider de la chaleur depuis ladite pile à combustible (11) vers la proximité de ladite lame (6).

2. Rasoir selon la revendication 1, comprenant en outre :
une partie de stockage de puissance (4) pour stocker la puissance électrique générée par ladite pile à combustible (11) ;
une partie d'alimentation (16) pour fournir du combustible (14) à ladite pile à combustible (11) ; et
une partie de commande (33) pour provoquer l'alimentation électrique de ladite partie d'entraînement (5) par ladite partie de stockage de puissance (4) afin de réaliser ladite opération d'élimination de poils, provoquant la fourniture de combustible (14) à la pile à combustible (11) par ladite partie d'alimentation (16) après la fin de ladite opération d'élimination de poils, et provoquant le stockage de la puissance électrique générée dans ladite partie de stockage de puissance (4).

3. Rasoir selon la revendication 1 ou 2, **caractérisé en ce que**
la lame entraînée par ladite partie d'entraînement (5) est une lame interne (6), ladite lame interne étant enfermée dans un espace défini par une lame externe (7), un boîtier et un support de base (21), et
ladite partie de transfert thermique (12) est connectée audit support de base (21).

4. Rasoir selon l'une quelconque des revendications 1 à 3, **caractérisé en ce que** ladite partie de transfert thermique est une soufflante (42) et possède à la fois une fonction de soufflage d'air pour chauffer lesdites lames (6, 7) et une fonction de soufflage d'air pour libérer de la chaleur de la partie de génération de puissance de ladite pile à combustible (11).
